# EUROPEAN PATENT SPECIFICATION

(11) **EP 1 060 549 B1**
(45) Date of publication and mention of the grant of the patent: **17.09.2003**
(21) Application number: 99906574.1
(22) Date of filing: 17.02.1999
(51) Int. Cl.: H02G 3/22, F16L 5/00

(54) **A BUSHING**
DURCHFÜHRUNGSEINRICHTUNG
TRAVERSEE ISOLANTE

(30) Priority: 06.03.1998 NL 1008522; 19.03.1998 NL 1008638
(43) Date of publication of application: 20.12.2000
(73) Proprietor: Beele Engineering B.V., 7122 NZ Aalten (NL)
(72) Inventor: BEELE, Johannes, Alfred, NL-7122 NZ Aalten (NL)
(74) Representative: Hooiveld, Arjen Jan Winfried
(86) International application number: NL9900083
(87) International publication number: WO99045619

(56) References cited:
- EP-A- 0 058 876
- US-A- 3 830 954
- US-A- 3 860 787
- US-A- 4 358 632
- US-A- 4 771 136

## Description

The invention relates to a bushing for sealingly leading a cable, pipe or the like through a wall, said bushing comprising a frame of a rigid material, which can be sealingly fitted in an opening formed in said wall, and furthermore one or more parallelopiped blocks of a resilient material, such as rubber, which are built up of two identical halves, which blocks, in their assembled condition, exhibit a bore which is adapted with small tolerances to the shape and the dimensions of a cable to be led through, which blocks are placed into said frame opening with a close fit in operative condition, whilst furthermore pressure means comprising a pressure plate are present, which press the blocks that have been placed in the frame opening together in the plane of the frame opening in their operative condition, such that a sealing compression is obtained of the block halves relative to each other, of the outside surfaces of the blocks relative to each other, between the walls of the bores and the outsides of the cables present therein, and also between the outside surfaces of the blocks and the inner walls of the frame, whilst furthermore a closing element is provided, which is fitted in the frame above the pressure plate, and wherein said blocks are in contact with an electrically conductive cable shield of the cable in the operative condition of said bushing, wherein said blocks abut at least partially against the electrically conductive cable shield of the cable in the operative condition of the bushing.

Such a bushing is known from US patent publication no. 4,771,136 (Graver et al). US patent document no. 4,771,136 (Gravel et al) teaches a person skilled in the art to render blocks electrically conductive by adding nickel granules and chopped carbon fibres in predetermined proportions to a silicon rubber based material of said blocks, wherein reference is made to column 1 lines 53-55, column 2 lines 62-66, as well as claims 9 and 10 of that document. The carbon fibres may be metal coated fibres in chopped lengths of approximately six mm (column 1 lines 56-59 and claims 10 and 11 thereof), whereas the electrically conductive material of the blocks is particularly derived from a mix comprising 24% by weight of silicon rubber, 50% by weight of five mictron nickel granules, 4% by weight of carbon fibres and 22% by weight of fifteen micron nickel granules (column 2 line 67 - column 3 line 18, as well as claim 13 thereof). With reference to column 2 lines 52-61 and figure 3 of that document, a short length of insulation is stripped from a cable to be passed through in order to expose a length of an underlying screening wire of comparable size of the cable to a length of an annular portion of each block.

The objective of the invention is to provide a bushing which comprises a better protection against electromagnetic overvoltage and/or interference, which is simple, inexpensive, chemically resistant, fire resistant, gastight and watertight.

In order to accomplish that objective, a bushing of the kind referred to in the introduction is according to the invention characterized in that said blocks are made of (massive) rubber being made electrically conductive by adding carbon particles in the form of sort ("carbon black") thereto. Electrical installations and machines, wherein generally highly sensitive components are used for control and registration purposes, are highly susceptible to interference caused by various external electromagnetic fields and impulses. Said external electromagnetic fields and impulses may for example be generated by radar installations, thunderstorms, nuclear explosions and by electric/electronic equipment. In practice, steel constructions functioning as a Faraday cage are often placed round a space intended for electronic equipment in order to minimise such interference. Nevertheless, there is still a chance that electric cables, which are led into such a shielded space, will conduct undesirable electromagnetic fields and impulses into said electronic equipment. As a rule, said conduction will take place via the electrically conductive shielding ("braiding") of the bushed cables in question. According to the invention, said external, undesirable electromagnetic fields and impulses will flow to earth along the electrically conductive shielding of a bushed cable, via the electrically conductive blocks. Thus, the occurrence of said interference in electronic equipment is prevented in a simple manner. Furthermore it has become apparent that the present bushing is also quite suitable for leading a cable through a steel deck or bulkhead of a ship.

It is noted that within the framework of the invention, the term "cable" as used herein is understood to include an electrically conductive conduit, tube, pipe or the like, for example a metallic tube or conduit, with which the present blocks are in electrically conductive contact in the operative condition.

As the blocks abut at least partially against the electrically conductive cable shield of the cable in the operative condition of the bushing, it is possible to fit the blocks easily and firmly round the electrically conductive cable shield.

European patent publication no. 0 058 876 (System- und Verfahrenstechnik Verwaltungsgesellschaft mbH) discloses a bushing for leading a cable through a wall, wherein use is made of blocks built up of two identical halves, which blocks in their assembled condition exhibit a bore adapted to the shape of a cable to be led through. The protection against electromagnetic overvoltage and/or interference is achieved along two ways:
a. said blocks are made of an elastic material containing electrically conductive metal particles;
b. a copper shield band is placed into the bore of each halve, said copper shield bands abutting against the electrically conductive cable shield of the cable and being in contact with electrically conductive copper shield strips placed into slits in each halve.

United States patent document no. 4,358,632 (Buch) teaches to introduce fitting pieces each consisting of two identical halves and embracing a line, as well as neutral pieces and pressing means into a frame mounted into an opening in a wall. Said fitting pieces are made of an elastic material, wherein electrically conductive metal particles, for example aluminum particles, are incorporated in said elastic material.

British patent publication no. 2,186,440 and European patent document no. 0,183,300 disclose bushings without a protection against electromagnetic overtension and/or interference.

In one embodiment of a bushing according to the invention, said rubber is EPDM rubber, with the carbon particles in particular having a concave, dish-like shape, preferably being of the type "Ketjenblack" EC 300J or 600JD™. These types of soot, which are known under the trade name "Ketjenblack", have a unique morphology in comparison with conventional types of soot, which makes them uniquely suitable for the present electrically conductive application. The letters EPDM stand for Ethylene/Propylene/Diene/Monomer.

In another embodiment of a bushing according to the invention, blocks which are positioned one on top of the other in the operative condition of the bushing are provided with a profile on their respective outsides. A slight sealing pressure is thereby required in order to obtain an accurate seal of the blocks between themselves, which blocks are positioned one on top of the other in this condition. More in particular, the blocks are provided, at least along part of their length, with circular inner ribs, wherein said blocks, whose outsides abut against an inner wall of the frame in the operative condition of the bushing, are at least partially provided with external ribs on said outsides. Preferably, said external and/or inner ribs have a substantially serrated or triangular cross-section. This makes it possible to ensure an optimum sealing effect, whereby the serrated or triangular ribs are slightly compressed.

In another embodiment of a bushing according to the invention, anchoring strips are provided, which can be fitted on at least one side of the frame, in a direction parallel to the plane of the frame. More in particular, the blocks are externally provided with slots thereby, so that the anchoring strips can be inserted into said slots in the blocks from outside. The anchoring strips function to support the blocks in a direction perpendicularly to the longitudinal direction of the bushed cable, tube or the like. This prevents the blocks from moving out of the frame, whilst furthermore an improved internal transmission of pressure is achieved, so that again a smaller pressure is required for sealingly pressing the blocks together in the plane of the frame opening. It is noted that within this framework the term "anchoring" trips as used herein is understood to include other anchoring elements such as plates and the like as well.

The invention furthermore relates to a method for manufacturing a bushing according to the invention, wherein said blocks are made of an electrically conductive rubber by incorporating carbon particles in the form of soot ("carbon black") into the rubber by means of a vulcanizing process. The rubber is in particular EPDM rubber, whilst the carbon particles are preferably of the type "Ketjenblack" EC 300J or 600JD™.

The invention will be explained in more detail hereafter with reference to figures illustrated in a drawing of a preferred embodiment of the present invention, wherein:
Figure 1 is a schematic front view of the present bushing;
Figure 2 is a schematic, perspective view of the frame of Figure 1;
Figure 3 shows parallelopiped blocks of the bushing as shown in Figure 1, which blocks are provided with outer ribs having a serrated cross-section and with slots for receiving anchoring strips; and
Figure 4 shows a bushed cable of Figure 1 separately in perspective view.

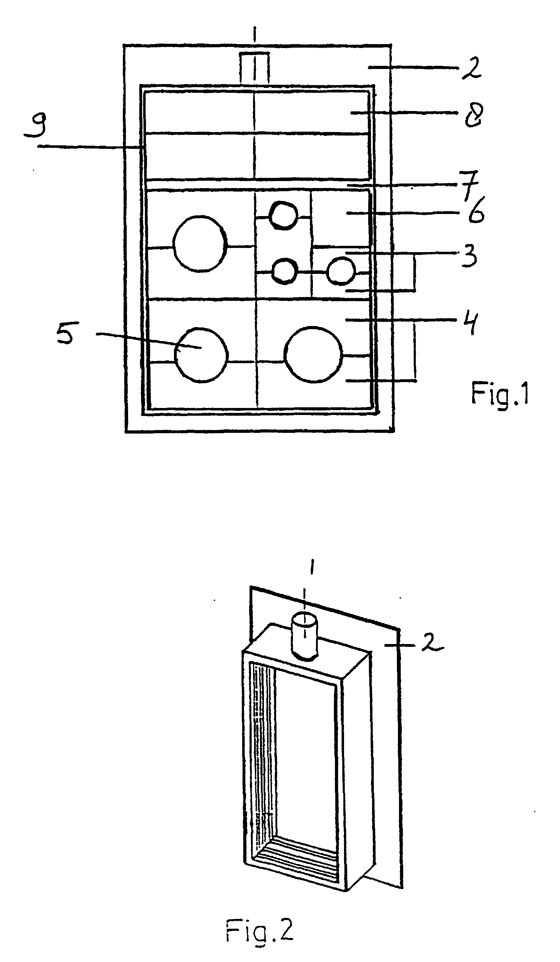

In Figure 1, a bushing 1 according to the invention can be distinguished, which consists of a frame 2 of a rigid material, which must be sealingly fitted in an opening in a wall. Two parallelopiped rubber blocks 3, 4 each consisting of two identical halves are to be provided in said frame opening, which blocks 3, 4 contain bores 5 for leading a cable, a tube, a pipe, a conduit or the like therethrough. A "blind" block 6 is inserted into frame 2 in those places where no cable is to be led through. Pressure means in the form of a pressure plate 8 press the blocks 3, 4, 6 which are present in the frame opening together in the operative condition, in such a manner as to obtain a sealing compression of the respective halves of the blocks 3, 4 relative to each other, of the respective outside surfaces of blocks 3, 4, 6 relative to each other, between the walls of bores 5 and the outsides of the cables present therein, and also between the outside surfaces of blocks 3, 4, 6 and the inner walls of frame 2. After a desired compression has been effected, a closing element in the form of a block 8 of a compression-resistant material is placed into the free space 9, between pressure plate 7 and frame 2, after which the pressure plate 7 can be released.

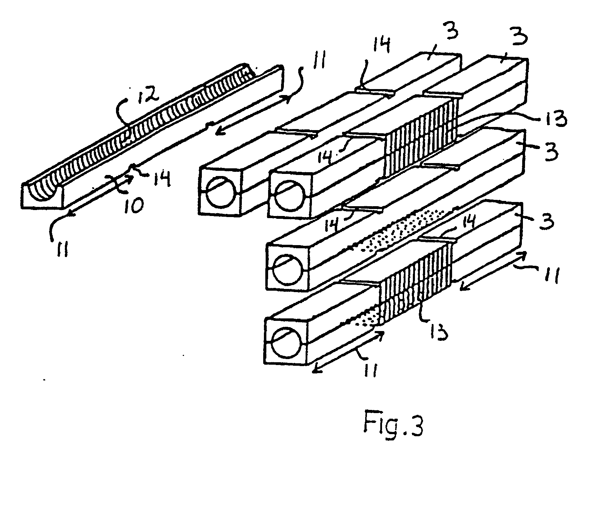

Figure 3 shows one half 10 of a parallelopiped block 3 and several complete parallelopiped blocks 3, which are dimensioned to extend outwards on either side of frame 2 in the operative condition of the bushing, in a direction transversely to the plane of the frame, over a distance 11 (for example 60 cm in the case of a frame width of likewise 60 cm, so that the width of the whole is 180 cm). The advantage of having the blocks extend outwards on at least one side of frame 2, in a direction transversely to the plane of the frame, in the operative condition of the bushing is that the bushing possesses a very good resistance to fire in that direction, due to the increased amount of fire resistant rubber, for example. Blocks 3 are provided with circular inner ribs 12 along at least part of their length, whereby blocks 3, whose outsides abut against an inner wall of the frame in the operative condition of the bushing 1 according to the invention, are at least partially provided with outer ribs 13 on said outsides. Blocks 3 are provided with slots 14, so that anchoring strips (not shown) can be inserted into slots 14 from outside.

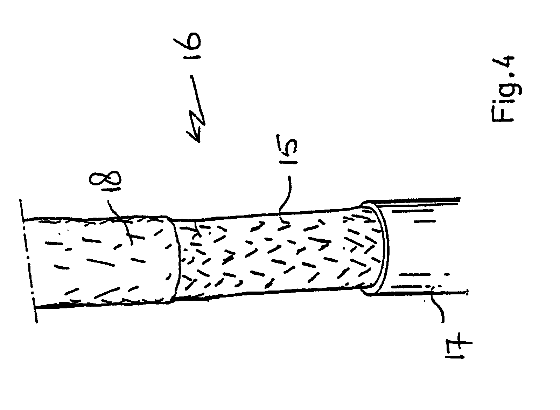

As already explained above, blocks 3 abut against the electrically conductive cable shield 15 ('braiding") of a bushed cable 16 (Figure 4). To this end, cable 16 has been stripped in situ of its metal shield 17 and also of its electrically insulating shield 18. Blocks 3 are electrically conductive, due to the incorporation of concave, dish-like carbon particles of the type "Ketjenblack" EC 300J or 600JD™ therein by means of a vulcanizing process, as a result of which external, undesirable electromagnetic fields and impulses flow to earth along the electrically conductive shield of the bushed cable 16, via the electrically conductive blocks 3. It is noted that the "braiding" 15 of the bushed cable 16 is only "exposed" along the depth of the frame. This means that blocks 3 enclose said "braiding" entirely, whereby cable 16 still contains its metal and electrically insulating shields before as well as after said blocks 3.

## Claims

1. A bushing (1) for sealingly leading a cable (16), pipe or the like through a wall, said bushing (1) comprising a frame (2) of a rigid material, which can be sealingly fitted in an opening formed in said wall, and furthermore one or more parallelopiped blocks (3,4) of a resilient material, such as rubber, which are built up of two identical halves (10), which blocks (3,4), in their assembled condition, exhibit a bore (5) which is adapted with small tolerances to the shape and the dimensions of a cable (16) to be led through, which blocks (3,4) are placed into said frame (2) opening with a close fit in operative condition, whilst furthermore pressure means comprising a pressure plate (7) are present, which press the blocks (3,4) that have been placed in the frame (2) opening together in the plane of the frame (2) opening in their operative condition, such that a sealing compression is obtained of the block halves (10) relative to each other, of the outside surfaces of the blocks (3,4) relative to each other, between the walls of the bores (5) and the outsides of the cables (16) present therein, and also between the outside surfaces of the blocks (3,4) and the inner walls of the frame (2), whilst furthermore a closing element (8) is provided, which is fitted in the frame (2) above the pressure plate (7), and wherein said blocks (3,4) are in contact with an electrically conductive cable shield (15) of the cable (16) in the operative condition of said bushing (1), wherein said blocks (3,4) abut at least partially against the electrically conductive cable shield (15) of the cable (16) in the operative condition of the bushing (1) **characterized in that** said blocks (3,4) are made of (massive) rubber being made electrically conductive by adding carbon particles in the form of soot ("carbon black") thereto.

2. A bushing (1) according to claim 1, wherein said carbon particles have a concave, dish-like shape.

3. A bushing (1) according to claim 1 or 2, wherein said carbon particles are of the type "Ketjenblack" EC 300J or 600JD™.

4. A bushing (1) according to claim 1, 2 or 3, wherein said rubber is EPDM rubber.

5. A bushing (1) according to any one of the preceding claims 1 - 4, wherein blocks (3,4) which are positioned one on top of the other in the operative condition of the bushing (1) are provided with a profile (13) on their respective outsides.

6. A bushing (1) according to any one of the preceding claims 1 - 5, wherein blocks (3,4) are provided, at least along part of their length, with circular inner ribs (12), and wherein said blocks (3,4), whose outer sides abut against an inner wall of the frame (2) in the operative condition of the bushing (1), are at least partially provided with outer ribs (13) on said outer sides.

7. A bushing (1) according to claim 6, wherein said outer and/or inner ribs (12,13) have a substantially serrated or triangular cross-section.

8. A bushing (1) according to any one of the preceding claims 1 - 7, wherein anchoring strips are provided, which can be fitted on at least one side of the frame (2), in a direction parallel to the plane of the frame (2).

9. A bushing (1) according to claim 8, wherein said blocks (3,4) are externally provided with slots (14) thereby, so that said anchoring strips can be inserted into said slots (14) in the blocks (3,4) from outside.

10. A method for manufacturing a bushing (1) according to any one of the preceding claims 1 - 9, wherein said blocks (3,4) are made of an electrically conductive (massive) rubber by incorporating carbon particles in the form of soot ("carbon black"), into the rubber by means of a vulcanizing process.

11. A method according to claim 10, wherein said rubber is in particular EPDM rubber.

12. A method according to claim 10 or 11, wherein said carbon particles are of the type "Ketjenblack" EC 300J or 600JD™.

## Patentansprüche

1. Durchführungsvorrichtung (1) zum dichtenden Führen eines Kabels (16), eines Rohres oder etwas Ähnlichen durch eine Wand, wobei die Durchführungsvorrichtung (1) einen Rahmen (2) aus einem starren Material, das dichtend in eine in der Wand gebildete Öffnung gepaßt werden kann, und einen oder mehrere Parallelepipedblöcke (3, 4) aus einem elastischen Material, zum Beispiel Gummi, umfaßt, die aus zwei identischen Hälften (10) gebaut sind, wobei die Blöcke (3, 4) in ihrem zusammengebauten Zustand eine Bohrung (5) aufweisen, die mit kleinen Toleranzen an die Form und die Abmessungen eines Kabels (16) angepaßt ist, das durchgeführt werden soll, wobei die Blöcke (3, 4) in die Öffnung des Rahmens (2) mit einer Feinpassung in einem Betriebszustand angeordnet sind, während darüber hinaus Druckmittel mit einer Druckplatte (7) vorhanden sind, die die Blöcke (3, 4), die in der Öffnung des Rahmens (2) angeordnet sind, in ihrem Betriebszustand in der Ebene der Öffnung des Rahmens (2) zusammendrücken, so daß eine dichtende Komprimierung der Blockhälften (10) relativ zueinander, der äußeren Oberflächen der Blöcke (3, 4) relativ zueinander, zwischen den Wänden der Bohrungen (5) und den Außenseiten der Kabel (16), die sich darin befinden, und auch zwischen den äußeren Oberflächen der Blöcke (3, 4) und den inneren Wänden des Rahmens (2) erhalten wird, während darüber hinaus ein Verschlußelement (8) vorgesehen ist, das in den Rahmen (2) über der Druckplatte (7) eingepaßt ist, und wobei die Blöcke (3, 4) eine elektrisch leitende Kabelabschirmung (15) des Kabels (16) in dem Betriebszustand der Durchführungsvorrichtung (1) berühren, wobei die Blöcke (3, 4) zumindest teilweise gegen die elektrisch leitende Kabelabschirmung (15) des Kabels (16) in dem Betriebszustand der Durchführungsvorrichtung (1) stoßen, **dadurch gekennzeichnet, daß** die Blöcke (3, 4) aus einem (massiven) Gummi hergestellt sind, das mit Hilfe eines Hinzufügens von Kohlenstoffteilchen in der Form von Ruß ("schwarzem Kohlenstoff") elektrisch leitend gemacht worden ist.

2. Durchführungsvorrichtung (1) nach Anspruch 1, **dadurch gekennzeichnet, daß** die Kohlenstoffteilchen eine konkave, schalenähnliche Form aufweisen.

3. Durchführungsvorrichtung (1) nach Anspruch 1 oder 2, **gekennzeichnet durch** Kohlenstoffteilchen vom Typ "Ketjenblack" EC 300J oder 600JD™.

4. Durchführungsvorrichtung (1) nach Ansprüchen 1, 2 oder 3, **dadurch gekennzeichnet, daß** das Gummi ein Ethylen-Propylen-Elastomer ist.

5. Durchführungsvorrichtung (1) nach einem der vorangegangenen Ansprüche 1 bis 4, **dadurch gekennzeichnet,daß** die Blöcke (3, 4), die in einem Betriebszustand der Durchführungsvorrichtung (1) aufeinander angeordnet sind, mit einem Profil (13) auf ihren entsprechenden Außenseiten versehen sind.

6. Durchführungsvorrichtung (1) nach einem der vorangegangenen Ansprüche 1 bis 5, **dadurch gekennzeichnet, daß** die Blöcke (3, 4) zumindest entlang eines Teils ihrer Länge mit kreisförmigen inneren Rippen (12) versehen sind und die Blöcke (3, 4), deren äußere Seiten in dem Betriebszustand der Durchführungsvorrichtung (1) an eine innere Wand des Rahmens (2) angrenzen, mindestens teilweise mit äußeren Rippen (13) auf den äußeren Seiten versehen sind.

7. Durchführungsvorrichtung (1) nach Anspruch 6, **dadurch gekennzeichnet, daß** die äußeren und/oder inneren Rippen (12, 13) einen im wesentlichen gezackten oder dreieckigen Querschnitt aufweisen.

8. Durchführungsvorrichtung (1) nach einem der vorangegangenen Ansprüche 1 bis 7, **gekennzeichnet durch** Verankerungsstreifen, die zumindest auf einer Seite des Rahmens (2) in einer Richtung parallel zu der Ebene des Rahmens (2) montiert werden können.

9. Durchführungsvorrichtung (1) nach Anspruch 8, **dadurch gekennzeichnet, daß** die Blöcke (3, 4) äußerlich mit Schlitzen (14) versehen sind, so daß die Verankerungsstreifen in die Schlitze (14) in den Blöcken (3, 4) von außen eingesetzt werden können.

10. Verfahren zum Herstellen einer Durchführungsvorrichtung (1) nach einem der vorangegangenen Ansprüche 1 bis 9, **dadurch gekennzeichnet, daß** die Blöcke (3, 4) aus einem elektrisch leitenden (massiven) Gummi mit Hilfe eines Zusammenführens von Kohlenstoffteilchen in Form von Ruß ("schwarzem Kohlenstoff") in das Gummi mit Hilfe eines Vulkanisierungsverfahrens hergestellt werden.

11. Verfahren nach Anspruch 10, **dadurch gekennzeichnet, daß** das Gummi insbesondere ein Ethylen-Propylen-Elastomer ist.

12. Verfahren nach Anspruch 11 oder 12, **gekennzeichnet durch** Kohlenstoffteilchen von dem Typ "Ketjenblack" EC 300J oder 600JD™.

## Revendications

1. Manchon (1) destiné à conduire de manière étanche un câble (16), conduit ou analogue à travers une paroi, le manchon (1) comprenant un châssis (2) d'un matériau rigide qui peut être monté de manière étanche dans une ouverture formée dans la paroi, et en outre un ou plusieurs blocs parallélépipédiques (3, 4) d'un matériau élastique, tel que du caoutchouc, qui sont formés de deux moitiés identiques (10), les blocs (3, 4), à l'état assemblé, formant un trou (5) qui est adapté, avec de faibles tolérances, à la configuration et aux dimensions d'un câble (16) destiné à être placé à l'intérieur, les blocs (3, 4) étant placés dans l'ouverture du châssis (2) sous forme ajustée intimement à l'état de fonctionnement, alors qu'en outre un dispositif de pression qui comporte une plaque de pression (7) est présent et repousse les blocs (3, 4) qui ont été placés dans l'ouverture du châssis (2) en coopération dans le plan de l'ouverture du châssis (2) à l'état de fonctionnement, si bien qu'une compression d'étanchéité est obtenue entre les moitiés de bloc (10) l'une par rapport à l'autre, aux surfaces externes des blocs (3, 4) les unes par rapport aux autres, entre les parois des trous (5) et aux faces externes des câbles (16) présents à l'intérieur, et aussi entre les surfaces externes des blocs (3, 4) et les parois internes du châssis (2), alors que, en outre, un élément de fermeture (8) est incorporé et est monté dans le châssis (2) au-dessus de la plaque de pression (7), et dans lequel les blocs (3, 4) sont au contact d'un organe protecteur de câble (15) qui est conducteur de l'électricité et qui fait partie du câble (16) à l'état de fonctionnement du manchon (1), les blocs (3, 4) étant en butée au moins partiellement contre l'organe protecteur de câble (15) conducteur de l'électricité appartenant au câble (16) à l'état de fonctionnement du manchon (1),
**caractérisé en ce que** les blocs (3, 4) sont formés de caoutchouc (massif) rendu conducteur de l'électricité par addition de particules de carbone sous forme de suie ("noir de carbone").

2. Manchon (1) selon la revendication 1, dans lequel les particules de carbone ont une forme analogue à une cuvette concave.

3. Manchon (1) selon la revendication 1 ou 2, dans lequel les particules de carbone sont du type "Ketjenblack" EC 300J ou 600JD.

4. Manchon (1) selon la revendication 1, 2 ou 3, dans lequel le caoutchouc est un caoutchouc EPDM.

5. Manchon (1) selon l'une des revendications précédentes 1 à 4, dans lequel des blocs (3, 4) qui sont positionnés l'un sur l'autre à l'état de fonctionnement du manchon (1) sont réalisés avec un profil (13) à leurs parties respectives externes.

6. Manchon (1) selon l'une quelconque des revendications précédentes 1 à 5, dans lequel les blocs (3, 4) comportent, au moins le long d'une partie de leur longueur, des nervures internes circulaires (12), et dans lequel les blocs (3, 4) dont les faces externes sont en butée contre une paroi interne du châssis (2) à l'état de fonctionnement du manchon (1) sont au moins partiellement munis de nervures externes (13) à leurs faces externes.

7. Manchon (1) selon la revendication 6, dans lequel les nervures externes et/ou internes (12, 13) ont une section triangulaire ou pratiquement crénelée.

8. Manchon (1) selon l'une quelconque des revendications précédentes 1 à 7, dans lequel des bandes d'ancrage sont incorporées et peuvent être disposées sur au moins un côté du châssis (2) en direction parallèle au plan du châssis (2).

9. Manchon (1) selon la revendication 8, dans lequel les blocs (3, 4) sont munis de fentes (14)à l'extérieur, si bien que les bandes d'ancrage peuvent être insérées dans les fentes (14) formées dans les blocs (3, 4) depuis l'extérieur.

10. Procédé de fabrication d'un manchon (1) selon l'une quelconque des revendications 1 à 9, dans lequel les blocs (3, 4) sont formés d'un caoutchouc (massif) rendu conducteur de l'électricité par incorporation de particules de carbone sous forme de suie ("noir de carbone") dans le caoutchouc à l'aide d'une opération de vulcanisation.

11. Procédé selon la revendication 10, dans lequel le caoutchouc est en particulier un caoutchouc EPDM.

12. Procédé selon la revendication 10 ou 11, dans lequel les particules de carbone sont du type "Ketjenblack" EC300J ou 600JD.
